# FASCICULE DE BREVET EUROPEEN

(11) **EP 3 390 831 B1**
(45) Date de publication et mention de la délivrance du brevet: **11.03.2020**
(21) Numéro de dépôt: 16815898.8
(22) Date de dépôt: 08.12.2016
(51) Int. Cl.: F04D 17/10, F04D 25/08, F04D 29/42, F04D 29/58, F04D 25/06, H02K 5/20, H02K 9/14

(54) **COMPRESSEUR CENTRIFUGE ÉLECTRIQUE DE TURBOMACHINE OU D'AÉRONEF**
ELEKTRISCHER KREISSELVERDICHTER FÜR EINE TURBOMASCHINE ODER EIN FLUGZEUG
ELECTRICAL CENTRIFUGAL COMPRESSOR FOR TURBOMACHINE OR AIRCRAFT

(30) Priorité: 14.12.2015 FR 1562280
(43) Date de publication de la demande: 24.10.2018
(73) Titulaire: Safran Electrical & Power, 31702 Blagnac Cedex (FR)
(72) Inventeur: STEFANOVIC, Nicolas, 31702 Blagnac (FR); WISSEMER, Eric, 31702 Blagnac (FR); DELERIS, Jacques, 31702 Blagnac (FR); FONTALBAT, Thierry, 31702 Blagnac (FR)
(74) Mandataire: Gevers & Orès
(86) Numéro de dépôt international: PCT/FR2016/053260
(87) Numéro de publication internationale: WO 2017/103383

(56) Documents cités:
- EP-A2- 2 409 920
- US-A- 5 350 039
- US-A1- 2014 030 070

## Description

### DOMAINE TECHNIQUE

La présente invention concerne notamment un compresseur centrifuge électrique de turbomachine ou d'aéronef.

### ETAT DE L'ART

L'état de l'art comprend notamment les documents US 5 350 039 A, EP 2 409 920 A2 et US 2014/030070 A1.

Une turbomachine comprend plusieurs équipements et peut comprendre un compresseur centrifuge électrique pour générer un flux d'air comprimé destiné à alimenter par exemple une pile à combustible ou une enceinte à pressuriser telle qu'une cabine de l'aéronef.

Dans la technique actuelle, un compresseur de ce type comprend un moteur électrique dont le stator est porté par un carter et dont le rotor comprend un arbre qui est monté à l'intérieur du carter et qui entraîne une roue centrifuge de compression.

Le rotor de ce type de compresseur tourne en général à des vitesses élevées et il est nécessaire de le refroidir pour évacuer l'énergie calorifique qu'il produit. Il est connu d'équiper un tel compresseur d'un carter à double peau. Le carter comprend alors deux peaux sensiblement cylindriques et coaxiales s'étendant autour du moteur et définissant entre elles une veine annulaire de passage d'un flux d'air de refroidissement. Cette veine s'étend sensiblement sur toute la dimension longitudinale de l'arbre. L'arbre comprend une extrémité longitudinale portant la roue de compression et une extrémité longitudinale opposée portant une roue de ventilation destinée à forcer le passage d'air dans la veine de refroidissement.

Le compresseur centrifuge électrique est alimenté par deux flux d'air, un premier flux d'air qui traverse la veine annulaire en vue du refroidissement du compresseur, et un second flux d'air qui alimente la roue de compression, ces flux d'air étant indépendants

Ce compresseur présente des inconvénients :
- l'arbre du moteur électrique présente deux sorties, l'une pour la roue principale de compression et l'autre pour la roue additionnelle de ventilation ;
- le dimensionnement de cette roue additionnelle dépend de la puissance thermique à évacuer ; pour la puissance globale du moteur électrique, il faut considérer la puissance du compresseur proprement dit additionnée à la puissance supplémentaire due à la roue de ventilation ;
- par manque d'étanchéité, les flux d'air peuvent se mélanger ; en particulier, le flux d'air de ventilation peut être pollué par des fuites du flux d'air de compression, ce qui se traduit par un réchauffement du flux d'air de ventilation dont l'efficacité diminue ;
- le refroidissement du moteur du compresseur par le premier flux d'air requiert beaucoup de puissance au niveau de l'arbre moteur particulièrement à haute vitesse (le rendement d'une roue de compression est meilleur à haute vitesse, alors que le rendement d'une roue de ventilation se dégrade au-delà de 30 000 tours par minute, là où le besoin en refroidissement est le plus important).

Concernant l'état de l'art, dans de nombreux cas, ce type de compresseur est refroidi par un liquide circulant dans un circuit de refroidissement autour du moteur. Cette solution est contraignante pour des conditions avions (en particulier température basse et pression d'où nécessité d'utiliser de l'huile) et rend le système plus complexe : ajout d'une pompe pour entraîner le liquide. Cette solution est très utilisée dans le milieu automobile car le liquide de refroidissement ainsi que la pompe sont généralement déjà disponibles.

### EXPOSE DE L'INVENTION

L'invention apporte une solution simple, efficace et économique à au moins une partie des problèmes précités.

L'invention propose à cet effet un compresseur centrifuge électrique, en particulier pour une turbomachine ou un aéronef, comportant un moteur électrique dont le stator est porté par un carter et dont le rotor comprend un arbre monté à l'intérieur dudit carter et entraînant une roue centrifuge de compression, ledit carter étant à double peau et comportant deux peaux sensiblement cylindriques et coaxiales s'étendant autour dudit moteur et définissant entre elles une veine annulaire de passage d'un premier flux d'air de refroidissement dont une entrée est située à une première extrémité longitudinale dudit arbre et dont une sortie est reliée à une seconde extrémité longitudinale dudit arbre, qui porte ladite roue centrifuge, caractérisé en ce qu'il comprend des moyens de prélèvement d'un second flux d'air de refroidissement en sortie de ladite roue centrifuge, des moyens de canalisation dudit second flux d'air le long dudit arbre jusqu'à ladite première extrémité, et des moyens d'évacuation dudit second flux d'air à l'extérieur dudit carter pour éviter son mélange audit premier flux d'air.

Le flux d'air prélevé en sortie de la roue de compression circule le long de l'arbre du moteur électrique en vue de son refroidissement. On comprend ainsi que le compresseur est refroidi par un premier flux d'air circulant entre les peaux du carter et par un second flux d'air circulant le long et autour de l'arbre. Ce refroidissement optimisé permet d'envisager d'augmenter la vitesse de rotation de l'arbre par rapport à la technique antérieure, par exemple jusqu'à 150 000 voire 170 000 tours par minute.

Par ailleurs, l'évacuation du second flux d'air est maîtrisée ce qui évite son mélange avec le premier flux d'air, qui n'est ainsi pas réchauffé par le second flux.

Le compresseur selon l'invention peut comprendre une ou plusieurs des caractéristiques suivantes, prises isolément ou en combinaison les unes avec les autres :
- la sortie de ladite veine est reliée à une entrée d'air de ladite roue centrifuge ; on comprend dès lors que le premier flux d'air de refroidissement alimente la roue de compression et qu'en sortie de cette roue, une majeure partie du débit de sortie fournit le flux d'air principal de sortie du compresseur et qu'un débit de fuite forme le second flux d'air de refroidissement qui sera évacué à l'extérieur sous la forme d'une flux d'air secondaire de sortie du compresseur,
- l'air comprimé sortant de la roue centrifuge est acheminé jusqu'à une sortie (principale) d'air comprimé, qui est par exemple située au voisinage de la seconde extrémité,
- les moyens d'évacuation forment ou comprennent une sortie (secondaire) d'air de ventilation, qui est par exemple située au voisinage de la première extrémité,
- ledit carter est conformé pour assurer la liaison de la sortie de ladite veine à l'entrée de ladite roue centrifuge,
- le compresseur comprend des paliers, de préférence à feuilles, traversés par ledit arbre et fixés au carter, ledit second flux d'air étant destiné à circuler entre les paliers et ledit arbre,
- ledit arbre comprend une collerette radiale intercalée entre deux parois radiales de paliers,
- lesdits moyens d'évacuation comprennent un gicleur configuré pour réguler le débit dudit second flux d'air,
- ledit carter comprend ou porte un déflecteur configuré pour disperser ledit second flux d'air, et
- un capotage est monté de manière étanche sur le carter, au niveau de ladite première extrémité, et est configuré pour éviter un mélange desdits premier et second flux d'air.

La présente invention concerne également une turbomachine, en particulier d'aéronef, ou un aéronef, comportant au moins un compresseur tel que décrit ci-dessus, par exemple pour l'alimentation d'une pile à combustible ou la pressurisation d'une enceinte.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- les figures 1 et 2 sont des vues schématiques en perspective d'un compresseur électrique selon l'invention, vu respectivement de l'avant et de l'arrière,
- la figure 3 est une vue schématique en coupe longitudinale du compresseur des figures 1 et 2,
- la figure 4 est une vue schématique en perspective de l'arbre du moteur électrique du compresseur des figures 1 et 2,
- la figure 5 est une vue schématique en perspective et en coupe longitudinale d'une partie d'un carter et d'un palier du compresseur des figures 1 et 2,
- les figures 6 à 8 sont des vues schématiques en perspective des paliers du compresseur des figures 1 et 2,
- la figure 9 est une vue schématique en perspective et en coupe longitudinale d'une autre partie d'un carter, du moteur et d'un palier du compresseur des figures 1 et 2, et
- la figure 10 est une vue correspondant à celle de la figure 3 et illustrant les flux d'air à l'intérieur du compresseur.

### DESCRIPTION DETAILLEE

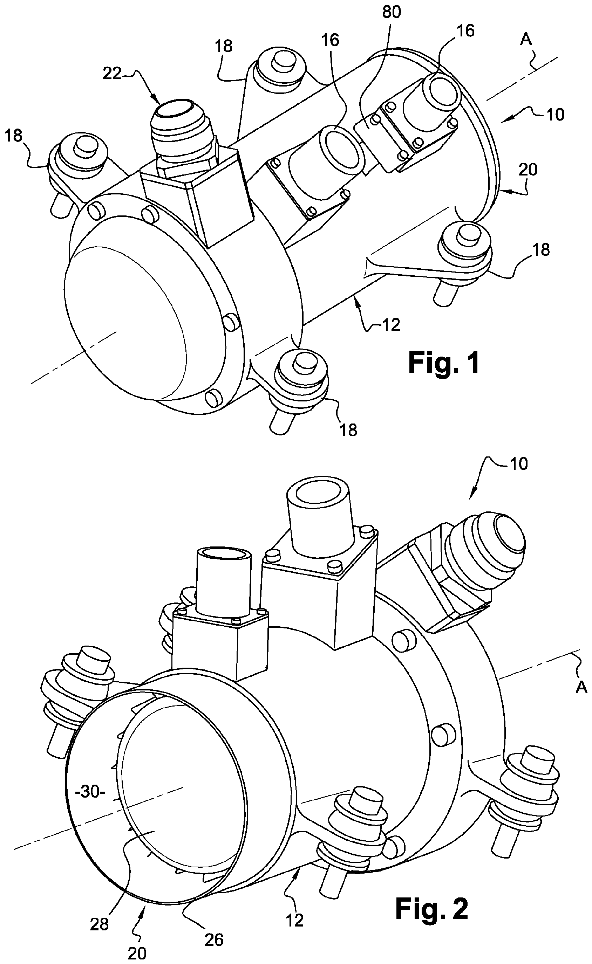

Les figures 1 et 2 représentent un mode de réalisation du compresseur électrique 10 selon l'invention, ce compresseur 10 étant utilisé dans le domaine aéronautique par exemple pour l'alimentation d'une pile à combustible ou pour pressuriser une enceinte d'un aéronef.

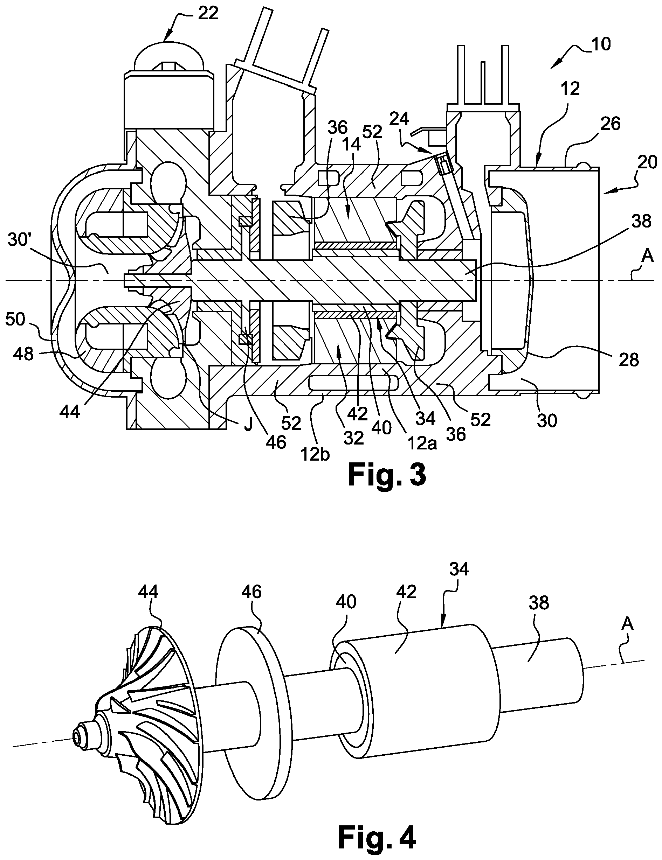

Le compresseur 10 comprend un carter 12 à l'intérieur duquel est notamment monté un moteur électrique 14, visible à la figure 3.

Le carter 12 du compresseur a une forme générale cylindrique d'axe A de révolution ou longitudinal.

Le carter 12 porte des bornes 16 de connexion électrique notamment pour l'alimentation électrique du moteur voire également de capteurs internes.

Le carter 12 comprend des pattes latérales 18 comportant des orifices de passage de moyens de fixation du type vis-écrou par exemple. Le compresseur 10 est ainsi fixé sur un élément de turbomachine ou d'aéronef par l'intermédiaire des pattes 18 de son carter 12.

Le carter 12 définit ici une unique entrée d'air 20, une sortie principale 22 d'air comprimé, et une sortie secondaire 24 d'air de ventilation qui est visible à la figure 3.

L'entrée d'air 20 est axiale et située à une extrémité longitudinale du carter, ici son extrémité arrière. Elle a en section une forme circulaire. A son extrémité arrière, le carter 12 a un rebord cylindrique 26 d'axe A, qui s'étend autour d'un capotage circulaire 28 coaxial au rebord. Le capotage 28 a un diamètre externe inférieur au diamètre interne du rebord 26 et définit avec ce dernier une veine annulaire 30 de passage d'un premier flux d'air qui sert d'abord au refroidissement du compresseur puis à son alimentation.

La sortie principale d'air 22 a une orientation sensiblement radiale par rapport à l'axe A. Elle est située au voisinage de l'extrémité avant du carter, c'est-à-dire du côté opposé à l'entrée 20.

La sortie secondaire d'air 24 est visible à la figure 3 et sera décrite plus en détail dans ce qui suit.

On se réfère désormais à la figure 3. Le moteur électrique 14 comprend un stator 32 et un rotor 34. Dans l'exemple représenté, le stator 32 comprend des bobinages 36 fixés à l'intérieur du carter, sensiblement au milieu de celui-ci dans sa direction longitudinale. Le rotor 34 comprend un arbre 38 d'axe A qui porte des aimants 40 maintenus fixement sur la périphérie de l'arbre au moyen d'une frette tubulaire 42.

L'arbre 38 est mieux visible à la figure 4. Il a une forme allongée le long de l'axe A et porte à une extrémité une roue centrifuge de compression 44. De façon connue, cette roue 44 comprend une entrée axiale, ici orientée vers l'avant, et une sortie radiale orientée vers l'extérieur.

Les aimants 40 et la frette 42 sont situés sensiblement au milieu de l'arbre, dans sa direction longitudinale. Entre la roue 44 et les aimants 40, l'arbre comprend une collerette annulaire radiale 46.

Comme on le voit à la figure 3, le rotor 34 s'étend sur une majeure partie de la dimension longitudinale du carter 12. La roue 44 est située dans un plan transversal passant par la sortie 22, et est entourée par un carénage interne 48 monté dans le carter 12 et formant un pavillon de volute. Ce carénage 48 est lui-même entouré par un autre capotage avant 50 qui est fixé sur le carter 12 et qui ferme de manière étanche l'extrémité avant du compresseur.

Le carter 12 est ici du type à double peau et comprend deux peaux cylindriques et coaxiales, respectivement interne 12a et externe 12b. Les peaux s'étendent sur sensiblement toute la dimension longitudinale du carter 12. Le rebord 26 forme un prolongement arrière de la peau externe 12b et la périphérie externe du capotage avant 50 est destinée à s'étendre dans la continuité de la peau 12b. La périphérie externe du capotage arrière 28 s'étend dans la continuité de la peau interne 12a et la périphérie externe du carénage 48 s'étend dans la continuité de cette peau. Ce carénage 48 a en demi section une forme générale en C et est située à distance du capotage 50 de façon à ce que la veine annulaire 30 définie entre les peaux 12a, 12b se poursuive et soit déviée à 180° vers l'entrée de la roue de compression 44. La veine annulaire 30 se transforme en veine cylindrique 30' à l'intérieur du carénage 48. Le carénage 48 entoure la roue de compression 44 avec un faible jeu et définit avec celle-ci une veine, à nouveau annulaire, dans lequel l'air est comprimé puis évacué vers la sortie 22.

Les peaux 12a, 12b sont reliées entre elles par des ailettes 52. Le compresseur 10 peut par exemple comprendre trois rangées annulaires d'ailettes. Les rangées peuvent être espacées longitudinalement les unes des autres et les ailettes de chaque rangée sont de préférence régulièrement réparties autour de l'axe A. Les ailettes de la rangée intermédiaire sont ici disposées en quinconce par rapport aux ailettes des rangées avant et arrière.

Un jeu J est présent entre la sortie de la roue et le carter, c'est-à-dire entre la périphérie externe de la roue et le carter. Ce jeu entraîne une fuite qui, dans le cas présent, est utilisée pour refroidir des paliers et éviter de l'air stagnant à ce niveau.

Le rotor 34 est guidé en rotation dans le carter 12 par des paliers 54, 56, 58, qui sont ici au nombre de trois. Les paliers sont configurés pour autoriser la circulation d'air entre eux et le rotor, le long de l'axe A, d'avant en arrière. Les paliers sont par exemple du type à feuilles, c'est-à-dire qu'ils portent des feuilles métalliques destinées à être intercalées entre les corps des paliers et le rotor.

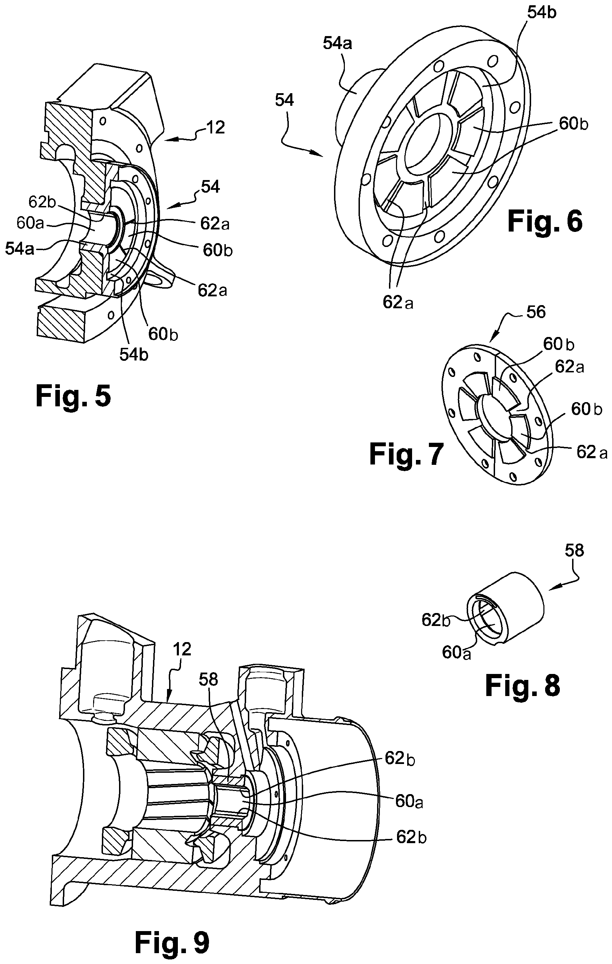

La figure 5 montre une partie arrière du carter 12 qui porte le palier 54, également visible à la figure 6. Ce palier 54 comprend un corps présentant une paroi cylindrique tubulaire avant 54a et une paroi radiale arrière 54b. Le corps du palier est fixé au carter par des vis par exemple. La paroi 54a comprend sur sa surface cylindrique interne une rangée annulaire de feuilles 60a incurvées définissant une surface de glissement de la portion de l'arbre 38 correspondante, et délimitant entre elles des canaux 62b longitudinaux de circulation d'air. La paroi 54b comprend sur sa surface radiale arrière une rangée annulaire de feuilles 60b planes définissant une surface radiale de glissement de la collerette 46, et délimitant entre elles des canaux 62a radiaux de circulation d'air.

La collerette 46 est intercalée axialement entre la paroi 54b et le palier 56, visible aux figures 7 et 3. Ce palier 56 comprend une paroi radiale destinée à être appliquée et fixée sur le palier 54 et le carter. Il comprend sur sa surface radiale avant une rangée annulaire de feuilles 60b planes définissant une surface radiale de glissement de la collerette 46, et délimitant entre elles des canaux 62a radiaux de circulation d'air.

Le rotor 34 est ainsi maintenu axialement dans le carter 12 par l'intermédiaire des paliers 54, 56 qui enserre axialement sa collerette 46.

La figure 9 montre une partie arrière du carter 12 qui porte le palier 58, également visible à la figure 8. Le palier 58 comprend une paroi cylindrique tubulaire et comprend sur sa surface cylindrique interne une rangée annulaire de feuilles 60a incurvées définissant une surface de glissement de la portion de l'arbre 38 correspondante, et délimitant entre elles des canaux 62b longitudinaux de circulation d'air. Les paliers 54, 58 peuvent être montés par frettage dans le carter.

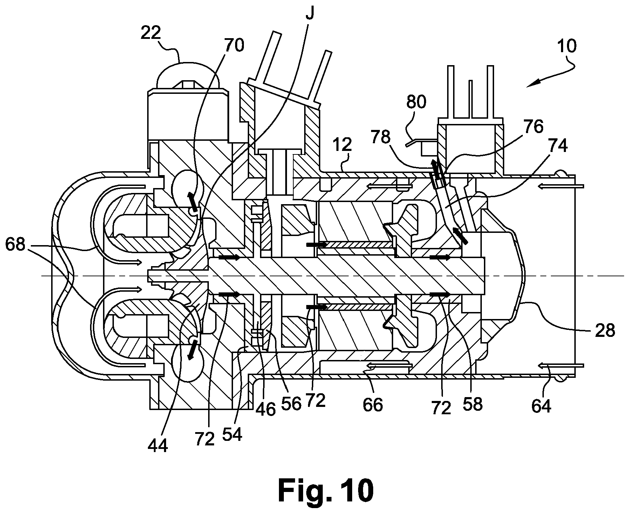

La figure 10 permet de voir la circulation des flux d'air dans le compresseur 10. Les flèches 64 montrent le flux d'entrée d'air dans le compresseur. Ce flux d'air pénètre dans la veine 30 et forme un flux d'air 66 de refroidissement du compresseur et en particulier de son stator. Il circule entre les peaux 12a, 12b jusqu'au capotage avant 50 où il est dévié pour former un flux d'air 68 alimentant la roue de compression 44. La roue 44 comprime le flux d'air 68 et délivre un flux d'air comprimé 70 qui sort du compresseur par une volute puis la sortie 22. Le montage de la roue 44 dans le carter 12 est configuré de sorte qu'un débit de fuite calibré ait lieu en sortie de la roue 44 par le jeu J. Ce débit de fuite génère un flux d'air de refroidissement 72, en particulier du rotor, qui circule entre le rotor et les paliers 54, 56, 58, et plus exactement à travers les canaux 62a, 62b précités. On comprend que l'air circule :
- d'abord axialement le long de la portion de l'arbre 38 s'étendant entre la roue 44 et la collerette 46,
- ensuite radialement vers l'extérieur le long de la face avant de la collerette,
- ensuite radialement vers l'intérieur le long de la face arrière de la collerette,
- axialement le long de la portion de l'arbre 38 s'étendant entre la collerette 46 et la frette 42,
- axialement entre la frette et le stator, et
- axialement le long de la portion de l'arbre 38 située en arrière de la frette 42.

L'air de refroidissement parvient alors à l'extrémité arrière de l'arbre 38, opposée à la roue 44. Le carter 12 comprend un conduit 74 d'évacuation de cet air à l'extérieur du compresseur 10. Dans l'exemple représenté, ce conduit a une orientation sensiblement radiale par rapport à l'axe A. Son extrémité radialement interne est située au voisinage de l'extrémité arrière de l'arbre 38 et son extrémité radialement externe débouche sur une surface cylindrique externe du carter 12.

Un gicleur 76 est monté à l'extrémité radialement externe du conduit 74 et permet de réguler le débit du flux d'évacuation 78 de l'air. Cet air est chaud et le capotage arrière 28 est monté de manière étanche sur le carter pour éviter des fuites de cet air et son mélange avec le flux d'air d'entrée ou de refroidissement 64, 66.

Comme on le voit à la figure 10, le gicleur 76 est orienté de façon à ce que le flux d'air 78 soit dirigé vers un déflecteur 80. Ce déflecteur est formé par une tôle métallique qui est fixée sur le carter et est configuré pour disperser le flux d'air et réduire sa vitesse. La tôle comprend ici une extrémité libre incurvée dont la surface inférieure est destinée à recevoir l'impact du flux d'air 78. Le déflecteur 80 est également visible à la figure 1.

## Revendications

1. Compresseur centrifuge électrique (10), en particulier pour une turbomachine ou un aéronef, comportant un moteur électrique (14) dont le stator (32) est porté par un carter (12) et dont le rotor (34) comprend un arbre (38) monté à l'intérieur dudit carter et entraînant une roue centrifuge (44) de compression, ledit carter étant à double peau et comportant deux peaux (12a, 12b) sensiblement cylindriques et coaxiales s'étendant autour dudit moteur et définissant entre elles une veine annulaire (30) de passage d'un premier flux d'air de refroidissement (66) dont une entrée est située à une première extrémité longitudinale dudit arbre et dont une sortie est reliée à une seconde extrémité longitudinale dudit arbre, qui porte ladite roue centrifuge, **caractérisé en ce que** le compresseur comprend des moyens (J) de prélèvement d'un second flux d'air de refroidissement (72) en sortie de ladite roue centrifuge, des moyens de canalisation dudit second flux d'air le long dudit arbre jusqu'à ladite première extrémité, et des moyens (74, 76) d'évacuation dudit second flux d'air (78), lesdits moyens (74, 76) d'évacuation étant configurés pour évacuer ledit second flux d'air (78) à l'extérieur dudit carter et pour éviter son mélange audit premier flux d'air.

2. Compresseur (10) selon la revendication précédente, dans lequel la sortie de ladite veine (30) est reliée à une entrée d'air de ladite roue centrifuge (44).

3. Compresseur (10) selon la revendication précédente, dans lequel ledit carter (12) est conformé pour assurer la liaison de la sortie de ladite veine (30) à l'entrée de ladite roue centrifuge (44).

4. Compresseur (10) selon l'une des revendications précédentes, dans lequel il comprend des paliers (54, 56, 58), de préférence à feuilles (60a, 60b), traversés par ledit arbre (38) et fixés au carter (12), ledit second flux d'air (72) étant destiné à circuler entre les paliers et ledit arbre.

5. Compresseur (10) selon la revendication précédente, dans lequel ledit arbre (38) comprend une collerette radiale (46) intercalée entre deux parois radiales de paliers (54, 56).

6. Compresseur (10) selon l'une des revendications précédentes, dans lequel lesdits moyens d'évacuation comprennent un gicleur (76) configuré pour réguler le débit dudit second flux d'air (78).

7. Compresseur (10) selon la revendication précédente, dans lequel ledit carter (12) comprend ou porte un déflecteur (80) configuré pour disperser ledit second flux d'air (78).

8. Compresseur (10) selon la revendication précédente, dans lequel un capotage (28) est monté de manière étanche sur le carter (12), au niveau de ladite première extrémité dudit arbre (38), et est configuré pour éviter un mélange desdits premier et second flux d'air (66, 72).

9. Turbomachine, en particulier d'aéronef, comportant au moins un compresseur (10) selon l'une des revendications précédentes, par exemple pour l'alimentation d'une pile à combustible ou la pressurisation d'une enceinte.

10. Aéronef, comportant au moins un compresseur (10) selon l'une des revendications 1 à 8, par exemple pour l'alimentation d'une pile à combustible ou la pressurisation d'une enceinte.

## Patentansprüche

1. Elektrischer Kreiselverdichter (10), insbesondere für eine Turbomaschine oder ein Luftfahrzeug, der einen Elektromotor (14) aufweist, dessen Stator (32) von einem Gehäuse (12) getragen wird, und dessen Rotor (34) eine Welle (38) umfasst, die in dem Inneren des Gehäuses montiert ist und ein Verdichtungszentrifugalrad (44) antreibt, wobei das Gehäuse doppelwandig ist und zwei im Wesentlichen zylindrische und koaxiale Wände (12a, 12b) aufweist, die sich um den Motor erstrecken und zwischen einander einen ringförmigen Strom (30) zum Durchgehen eines ersten Kühlluftstroms (66) definieren, von dem ein Eingang an einem ersten Längsende der Welle liegt, und von dem ein Ausgang mit einem zweiten Längsende der Welle verbunden ist, das das Zentrifugalrad trägt, **dadurch gekennzeichnet, dass** der Verdichter Mittel (J) zum Entnehmen eines zweiten Kühlluftstroms (72) am Ausgang des Zentrifugalrads, Kanalisationsmittel des zweiten Luftstroms entlang der Welle bis zu dem ersten Ende und Mittel (74, 76) zum Abführen des zweiten Luftstroms (78) umfasst, wobei die Abführmittel (74, 76) konfiguriert sind, um den zweiten Luftstrom (78) aus dem Gehäuse heraus abzuführen und sein Vermischen mit dem ersten Luftstrom zu verhindern.

2. Verdichter (10) nach dem vorstehenden Anspruch, wobei der Ausgang des Stroms (30) mit einem Lufteingang des Zentrifugalrads (44) verbunden ist.

3. Verdichter (10) nach dem vorstehenden Anspruch, wobei das Gehäuse (12) ausgestaltet ist, um die Verbindung des Ausgangs des Stroms (30) mit dem Eingang des Zentrifugalrads (44) sicherzustellen.

4. Verdichter (10) nach einem der vorstehenden Ansprüche, wobei er Lager (54, 56, 58), vorzugsweise mit Folien (60a, 60b), umfasst, die von der Welle (38) durchquert sind und an dem Gehäuse (12) befestigt sind, wobei der zweite Luftstrom (72) dazu bestimmt ist, zwischen den Lagern und der Welle zu zirkulieren.

5. Verdichter (10) nach dem vorstehenden Anspruch, wobei die Welle (38) einen radialen Bund (46) umfasst, der zwischen zwei radiale Lagerwände (54, 56) eingefügt ist.

6. Verdichter (10) nach einem der vorstehenden Ansprüche, wobei die Abführmittel eine Düse (76) umfassen, die konfiguriert ist, um den Durchsatz des zweiten Luftstroms (78) zu regulieren.

7. Verdichter (10) nach dem vorstehenden Anspruch, wobei das Gehäuse (12) einen Deflektor (80) umfasst oder trägt, der konfiguriert ist, um den zweiten Luftstrom (78) zu zerstreuen.

8. Verdichter (10) nach dem vorstehenden Anspruch, wobei eine Abdeckung (28) dicht auf das Gehäuse (12) im Bereich des ersten Endes der Welle (38) montiert ist und konfiguriert ist, um ein Vermischen des ersten und des zweiten Luftstroms (66, 72) zu verhindern.

9. Turbomaschine, insbesondere eines Luftfahrzeugs, die mindestens einen Verdichter (10) nach einem der vorstehenden Ansprüche aufweist, zum Beispiel zur Versorgung einer Brennstoffzelle oder zur Druckbeaufschlagung eines Einschlusses.

10. Luftfahrzeug, das mindestens einen Verdichter (10) nach einem der Ansprüche 1 bis 8 zum Beispiel zur Versorgung einer Brennstoffzelle oder zur Druckbeaufschlagung eines Einschlusses aufweist.

## Claims

1. Electric centrifugal compressor (10), in particular for a turbine engine or aircraft, comprising an electric motor (14), the stator (32) of which is supported by a casing (12) and the rotor (34) of which includes a shaft (38) mounted inside said casing, said shaft driving a centrifugal compressor impeller (44), said casing having a double skin and comprising two substantially cylindrical, coaxial skins (12a, 12b) extending around said engine and defining between them an annular flow path (30) suitable for the circulation of a first cooling air flow (66), one inlet of which is located at a first longitudinal end of said shaft and an outlet of which is connected to a second longitudinal end of said shaft, which supports said centrifugal compressor impeller, **characterised in that** the compressor comprises means (J) for collecting a second cooling air flow (72) at the outlet of said centrifugal compressor impeller, means for channelling said second air flow along said shaft up to said first end, and means (74, 76) for discharging said second air flow (78), the means (74, 76) for discharging being configured to discharge said second air flow (78) out of said casing and to prevent same from mixing with said first air flow.

2. Compressor (10) according to the previous claim, in which the outlet of said flow path (30) is connected to an air inlet of said centrifugal impeller (44).

3. Compressor (10) according to the previous claim, in which said casing (12) is configured to connect the outlet of said flow path (30) to the inlet of said centrifugal impeller (44).

4. Compressor (10) according to one of the previous claims, in which said compressor comprises bearings (54, 56, 58), preferentially foil (60a, 60b) bearings, intersected by said shaft (38) and secured to the casing (12), whereby said second air flow (72) being intended to circulate between the bearings and said shaft.

5. Compressor (10) according to the previous claim, in which said shaft (38) comprises a radial collar (46) inserted between two radial walls of the bearings (54, 56).

6. Compressor (10) according to one of the previous claims, in which said discharge means comprise a nozzle (76) configured to regulate the flow of said second air flow (78).

7. Compressor (10) according to the previous claim, in which said casing (12) includes or supports a deflector (80) configured to disperse said second air flow (78).

8. Compressor (10) according to the previous claim, in which a shielding (28) is mounted and sealed on the casing (12), at the level of said first end of said shaft (38), and is configured to prevent said first air flow from mixing with said second airflow (66, 72).

9. Turbine engine, in particular of an aircraft, including at least one compressor (10) according to one of the previous claims, for example to power a fuel cell or to pressurise an enclosure.

10. Aircraft, including at least one compressor (10) according to one of the claims 1 to 8, for example to power a fuel cell or to pressurise an enclosure.
